# DEMANDE DE BREVET EUROPEEN

(11) **EP 0 720 814 A1**
(43) Date de publication de la demande: **10.07.1996**
(21) Numéro de dépôt: 95402804.9
(22) Date de dépôt: 13.12.1995
(51) Int. Cl.: A01N 37/16

(54) **Production de formulations desinfectantes biocides, à base d'ions peracétiques**

(30) Priorité: 14.12.1994 FR 9415072
(71) Demandeur: CHEMOXAL S.A., F-75007 Paris (FR)
(72) Inventeur: Hamon, Catherine, F-92320 Chatillon sous Bagneux (FR); Teral, Gilles, F-75013 Paris (FR)
(74) Mandataire: Le Moenner, Gabriel

(57) **Abrégé**

Composition solide biocide contenant un système générateur d'ions peracétiques, mélangé à un acide organique stabilisateur choisi pour sa capacité, lorsque cette composition est introduite dans une solution aqueuse en des concentrations appropriées, à autoriser le réglage dans le temps de la libération des ions peracétiques dans cette solution aqueuse, les proportions relatives des constituants du système générateur, d'une part, et de l'acide organique stabilisateur, d'autre part, étant respectivement réglées de façon à ce que la concentration d'acide peracétique alors générée soit supérieure à un seuil de concentration capable d'induire un effet biocide pendant une durée d'action préalablement choisie. Application notamment de cette composition à la production de solutions hygiéniques ou désinfectantes.

## Description

L'invention est relative à des compositions destinées à la préparation de compositions à caractère biocide, à effet prolongé. Par exemple, elles sont d'application particulièrement avantageuse chaque fois qu'une surface doit être maintenue au contact d'un milieu ayant des propriétés désinfectantes non seulement suffisantes pour assurer un effet biocide, plus particulièrement à l'égard de virus, de colonies bactériennes ou de spores susceptibles de résister, on serait tenter de dire "au premier choc", voire même de proliférer en mettant à profit les qualités nutritives des produits de dégradation éventuellement libérés dans le milieu, soit par les constituants de la composition désinfectante elle-même, soit du fait de l'interaction de ces constituants avec les bactéries déjà détruites.

L'expression "biocide" telle qu'elle est souvent utilisée dans ce qui suit, doit être prise dans son acception la plus large. Elle a trait à la destruction de tout agent microbien, quelqu'en soit la nature. L'expression "biocide" recouvre par conséquent toute activité virucide, algicide, sporicide, bactéricide, fongicide, etc...

Il sera encore fait référence dans ce qui suit aux effets "décontaminants", "désinfectants" ou "stérilisants", étant entendu que l'effet "décontaminant" se rapporte à l'obtention d'une réduction d'une population initiale de microorganismes (bactéries, champignons, virus etc...) dans un rapport de 10⁻³ (-log 3), l'effet "désinfectant" à l'obtention d'une réduction dans un rapport de 10⁻⁵ (-log 5) et l'effet "stérilisant" à l'obtention d'une réduction dans un rapport de 10⁻⁷ (-log 7).

A titre d'exemples des domaines d'application non limitatifs en fait extraordinairement variés, auxquels l'invention s'intéresse plus particulièrement, on mentionnera plus particulièrement la désinfection d'instruments outils ou ustensiles utilisés dans les professions de la santé (par exemple instruments chirurgicaux, endoscopes, etc.) ou en matière d'hygiène (lentilles de contact, prothèses dentaires etc... ou encore dans un domaine évidemment différent, le nettoyage de canalisations destinées à la distribution d'eau potable.

L'invention a en outre pour but la mise en oeuvre, pour la fabrication de compositions présentant les caractéristiques biocides susmentionnées, de constituants dont l'innocuité a déjà été suffisamment établie dans d'autres domaines d'application, pour qu'il ne soit plus nécessaire de procéder à nouveau à de longues études de "non-toxicité" avant de passer à l'application industrielle immédiate.

Il s'agit, à titre d'exemples, de :
- H₂O₂ et/ou de générateurs de peroxydes, par exemple de persels : perborates, persulfates, percarbonates, etc... ;
- de produits dont ont déjà été utilisées les propriétés d'activateurs de blanchiment 0- ou N-acylé de type tétraacétyléthylène-diamine (TAED), des sucres acétylés ou autres composés répertoriés en cette qualité dans la bibliographie ;
- de l'acide citrique.

Des compositions mettant en oeuvre ces trois types d'ingrédients, individuellement ou même en mélange entre eux et avec d'autres constituants, ont déjà été décrites en vue de leur application à la constitution de lessives, en raison de leurs propriétés détergentes, et même dans le domaine de l'hygiène.

Par exemple dans le domaine de la détergence, KAO CORPORATION (JP 03091597) décrit des compositions blanchissantes liquides stables à pH=1,5 à 6 contenant H₂O₂, un surfactant et un stabilisant polyacrylique. HENKEL (EP 200163) prépare des agents de blanchiment sous forme de granulés contenant un peracide aliphatique, blanchissant et désinfectant, un sel inorganique hydratable et un polymère organique ; une autre application est le blanchiment des fibres textiles. PROCTER et GAMBLE (WO 93/14183) présente une composition détergente, contenant un surfactant anionique ou nonionique, un persel et un agent séquestrant. L'acide citrique (de même que l'acide tartrique, succinique) est présenté comme pouvant jouer ce rôle de séquestrant ou comme pouvant servir à l'enrobage de l'activateur de blanchiment. PROCTER ET GAMBLE (WO 92/13798) proposent une composition détergente préservant les couleurs lors des lavages en machines. Un mélange (UNILEVER EP 402971) contient entre autres de l'acide tartrique.

Les polyanhydrides obtenus par réaction d'acide adipique, sébacique, succinique et/ou citrique sur l'anhydride acétique, ont également été présentés comme jouant un rôle d'activateur de blanchiment en détergence (WARWICK INTERNATIONAL GROUP EP 534772, WO 93/06203).

On mentionnera enfin les compositions blanchissantes sous forme de tablettes effervescentes contenant un activateur de blanchiment, un persel (perborate, persulfate), un acide organique (tartrique, citrique, sulfonique...), sulfosuccinate de ricinoléyle et un stabilisant, décrites par RICHARDSON-VICKS, INC. (US 5055305) ou de PROCTER ET GAMBLE (EP 323049).

Dans le domaine de l'environnement, MULTI-CHEMIE AG (EP 183894) propose d'éliminer des dépôts de fer et de manganèse des installations d'eau potable par traitement de ces dernières par un mélange d'acide ou sel d'acides organiques ou inorganiques et de peroxydes tels que les persulfates.

KAO CORPORATION (JP 61278393, JP 61278394, JP 61278395) revendique des compositions pour purifier des bains d'eau sur base peroxydes inorganiques (perborates, percarbonate et persulfate de sodium)/benzoate de sodium/agent diluant de type carbonate, sulfate, phosphate de sodium/acide organique (citrique, oxalique, tartrique)/agent chélatant (EDTA, polymère)/surfactant anionique ou nonionique.

Dans le domaine de l'hygiène, KAO CORPORATION (JP 61159497; JP 61159498, JP 61264098) présente des formulations, pour l'élimination de moisissures, contenant un peroxyde organique (per-acétique, propionique, butyrique, caprylique, succinique, laurique...), et un sel de sodium, potassium, lithium, ammonium d'acide organique (acétique, tartrique, malique, gluconique, citrique, adipique...), un surfactant et un sel d'acide inorganique.

D'autres compositions (monopersulfate de potassium/acide organique (malonique, succinique, glutarique, adipique, pimérique, subérique, azélaique, sébacique...) en présence de divers additifs peuvent également être utilisées pour enlever les moisissures des plafonds, joints, murs dans les salles de bains, toilettes et cuisines (KAO CORPORATION JP 62001791).

Certaines préparations sont antiseptiques et désinfectantes de la peau (M. HEPPER, R. KAISER, A. KRAMER : DE 4137544) (sel de peroxyacide ou peroxyde inorganique ou organique ou hydroperoxyde/NaOCl/ ammonium quaternaire/ surfactant cationique/ taurolidine/sel d'acide carboxylique de type lactique, citrique, propionique).

De même, le brevet allemand (DE 3931129) de RECKITT GmbH propose des tablettes pour le nettoyage des prothèses dentaires (composition contenant du carbonate ou bicarbonate de sodium, de l'acide citrique ou du citrate, un mélange perborate/ activateur, un sel ou un acide phosphonique comme stabilisant).

Lorsque l'acide citrique est mentionné, ce l'est surtout en raison des propriétés de détartrage qui lui sont prêtées.

Dans le cadre des applications telles que mentionnées ci-dessus, on recherchait le plus souvent à tirer profit de la capacité des systèmes générateurs d'acide peracétique à le produire rapidement, de son effet peroxydant rapide et/ou de ses propriétés effervescentes.

En effet, quelque que soient leurs domaines d'applications respectifs, toutes ces compositions ont néanmoins été présentées comme devant répondre à un critère commun, à savoir une action nettoyante rapide.

C'est encore cette préoccupation que l'on retrouve dans le brevet britannique n° 2 268 879 (LAPORTE ESD Ltd) qui décrit des compositions désinfectantes solides utilisables pour la préparation de solutions nettoyantes à effet rapide. Elles comprennent un précurseur d'un peracide organique, tel qu'un persel, et un composé biocide d'ammonium quaternaire. Lorsque ces compositions sont dissoutes dans l'eau, l'acide peracétique est généré in situ à partir du précurseur et du persel. Mais, selon les termes du brevet britannique, l'ingrédient biocide essentiel de cette composition est constitué par le composé d'ammonium quaternaire.

L'objectif essentiel du brevet britannique était de produire des compositions actives, dans un délai inférieur à 5 minutes. Ce résultat serait acquis du fait de l'interaction du composé d'ammonium quaternaire biocide choisi et de l'acide peracétique libéré dans le milieu. Toujours selon ce brevet, des résultats encore plus rapides peuvent être obtenus par l'acidification du milieu à un pH compris de 1 à 7, de préférence de l'ordre de 4, cette acidification devant intervenir au moment où le taux de peracide généré à partir du précuseur et du persel atteint un maximum. A cet effet, il est recommandé que l'addition de l'acide utilisé (notamment un acide alimentaire tel que l'acide citrique, tartrique, adipique, succinique ou glutarique) intervienne après que le peracide ait été formé dans la solution. Pour parvenir à ce résultat, il a également été proposé de produire des compositions contenant tous les ingrédients requis y inclus l'acide alimentaire du genre en question, celui-ci étant néanmoins enrobé avec un constituant n'autorisant que la libération différée de l'acide dans la solution. A cet effet, le revêtement d'enrobage consiste de préférence en un matériau à faible coefficient de solubilisation, par exemple un silicate, de façon à obtenir la libération différée de l'acide lorsque l'ensemble de la composition, notamment sous forme de tablettes, est ajouté dans la solution aqueuse.

L'invention procède au contraire d'une démarche en sens opposé, à savoir promouvoir, au sein d'un milieu aqueux auquel doivent être conférées des propriétés biocides, notamment désinfectantes, une libération contrôlée ou stabilisée d'ions peracétiques à des niveaux pré-établis, et ce pendant des durées dépassant des seuils pré-établis, notamment supérieures à 24 heures.

Le maintien en permanence d'une activité biocide, notamment désinfectante, dans le milieu pendant un temps suffisamment long, est un objectif essentiel que la présente invention s'est assignée.

Dans certains domaines d'application, notamment en chirurgie, il est essentiel que le personnel hospitalier soit assuré du caractère désinfectant des solutions qu'il utilise à cet effet, sans qu'il ait à se préoccuper (naturellement dans des intervalles de temps prédéterminés) de la persistance de l'activité désinfectante, dès lors qu'il en ferait même des utilisations répétées. Il est d'autres cas où l'on souhaite s'assurer de l'effet de durée de l'action désinfectante d'une telle solution, par exemple lorsque l'on fait face à une contamination bactérienne qui n'est pas entièrement détruite, dès le premier contact des objets ou surfaces à désinfecter avec la solution désinfectante, par exemple parce qu'une certaine proportion de bactéries, initialement à l'état de spores, échappe à la première désinfection. Ces contaminations non détruites sont parfois à l'origine de la prolifération de colonies mêmes plus résistantes.

L'invention a donc pour objet une composition biocide, notamment désinfectante mettant en oeuvre des ions peracétiques à titre de principe actif principal, voire même unique, à longue durée d'action. Le procédé selon l'invention met en oeuvre la capacité nouvellement mise en évidence de certains acides organiques, parmi lesquels l'acide citrique, de permettre, lorsqu'ils sont utilisés en concentrations appropriées relativement à celles des constituants du système générateur d'acide peracétique (ou de sels de cet acide), le réglage de la concentration en ions peracétiques libérés dans le milieu à une valeur supérieure à un seuil suffisamment élevé et pendant une durée également suffisante pour assurer l'inactivation ou la destruction des micro-organismes introduits dans le milieu par les objets ou surfaces venant à son contact.

A cet effet, le procédé selon l'invention, de production d'une solution aqueuse biocide à longue durée d'action dont le principe biocide essentiel consiste en des ions peracétiques, ce procédé comportant l'introduction dans la solution d'un système générateur d'ions peracétiques au contact, dès l'origine, d'un acide organique stabilisateur choisi pour sa capacité, lorsqu'il est pris en des proportions choisies par rapport à celles des constituants du système générateur d'ions peracétiques, a autoriser le réglage dans le temps de la libération d'ions peracétiques dans le milieu, les concentrations relatives des constituants du système générateur, d'une part, et de l'acide organique stabilisateur, d'autre part, étant respectivement réglées de façon à ce que les concentrations des ions peracétiques libérés dans le milieu dépassent un seuil de concentration autorisant, pendant la durée d'action préalablement choisie, l'induction d'un effet biocide à l'égard des micro-organismes, notamment contaminants bactériens et virus, portés par des pièces ou surfaces introduites dans la solution.

La mise en oeuvre du procédé selon l'invention permet d'atteindre un degré de désinfection considérable répondant aux normes françaises en la matière, notamment celles des normes AFNOR NF T72-150, NF T72-200 ou NF T72-230. On le sait, la dernière norme permet de porter un jugement sur la qualité des produits utilisés comme antiseptiques et désinfectants et de les comparer dans des conditions reproductibles. La détermination est menée en laboratoire (in vitro) dans des conditions déterminées et permet d'apprécier une inactivation d'au moins 99,999 % des spores bactériennes de différentes espèces.

Du fait du degré de désinfection particulièrement élevé obtenu, les compositions selon l'invention sont applicables à la désinfection ou à la décontamination d'objets ou surfaces dans les domaines où celle-ci revêt une importance essentielle.

On mentionne à ce titre la désinfection des instruments chirurgicaux, des instruments d'études cliniques destinés à être introduits dans le corps humain, par exemple des endoscopes, notamment par mise en oeuvre des techniques décrites dans la demande de brevet internationale (PCT) WO 93/07909 pour le nettoyage par des solutions aqueuses peracides, d'une façon plus générale, de l'équipement médical ou chirurgical, équipements de chirurgie dentaire compris, ou la décontamination des canalisations d'eau potable. D'autres formes d'application possibles ont déjà été évoquées plus haut.

L'acide peracétique (ou sa base conjuguée) stabilisé peut être obtenu à partir de formulations CH₃CO₂H/H₂O₂/APA/H₂O ou in situ à partir de générateurs d'acide peracétique (ex. : TAED, DADHT, TAGU, sucre éthérifié ou non ethérifié ou non estérifié (ester et/ou acétyle, perhydrolysés par H₂O₂ ou tout autre peroxydant, par exemple des persels (ex. : perborates mono et/ou tétra hydratés, percarbonates...). De nombreux autres générateurs ou précurseurs ont été répertoriés dans la bibliographie, par exemple dans les brevets antérieurs mentionnés plus haut au titre de l'état antérieur de la technique).

Avantageusement, le système générateur d'acide peracétique consiste en un mélange d'un précurseur d'acide peracétique et d'un constituant distinct, notamment d'un persel, autorisant la perhydrolyse de ce précurseur au sein de la solution.

De façon particulièrement préférée, le précurseur d'acide peracétique est la tétraacétyléthylène-diamine et le persel un perborate de sodium, de préférence sous forme tétrahydratée, ou encore le percarbonate de sodium.

Pour ce qui est de l'acide organique capable, lorsqu'il est pris dans les proportions choisies indiquées ci-dessus, d'autoriser le réglage dans le temps de la libération d'ions peracétiques dans le milieu, on mentionnera à titre préféré l'acide citrique. Même si la suite de la description fait référence essentiellement à l'acide citrique, il est clair que tout autre acide organique capable d'exercer une fonction semblable, en d'autres termes de "stabiliser" la vitesse de libération des ions peracétiques (d'où la désignation "acide organique stabilisateur" utilisée dans la présente description et dans les revendications) peut être utilisé en lieu et place de l'acide citrique. A titre d'exemple de tels acides, on mentionnera les acides succinique, néanmoins moins efficaces que l'acide citrique, du moins dans les mêmes conditions de pH.

De façon préférée, les concentrations relatives des constituants du système générateur, d'une part, et de l'acide citrique, d'autre part, sont réglées de façon à permettre la génération au sein du volume de la solution aqueuse, d'une concentration d'acide peracétique supérieure à un seuil de 10 ppm, de préférence de 40 ppm, et la stabilisation de cette concentration à des valeurs supérieures à ce seuil pendant une durée d'au moins huit jours.

En particulier, la teneur relative en acide citrique du milieu peut être ajustée pour obtenir un pH compris entre 4 et 13, notamment de l'ordre de 6 à 10,5 notamment lorsque le persel utilisé est un perborate ou un percarbonate de sodium. Naturellement, les proportions peuvent encore prendre en compte d'autres paramètres, par exemple des températures qui doivent être maintenues dans le milieu (elles peuvent s'étager de 0°C à 150°C), des qualités des eaux utilisées (ex. : la dureté (1°F à100°F), leur alcalinité (TAC, TC...) etc. Enfin, les intervalles de pH les plus efficaces peuvent également dépendre de la nature du persel utilisé.

Sans que les indications qui suivent aient le moindre caractère limitatif, on remarquera que les proportions relatives des trois constituants préférés seront souvent des ordres de grandeur qui suivent, notamment dans le cas où le persel est le perbonate de sodium sous forme térahydratée :
- de 250 à 3000 parties en poids de tétraacétyléthylène-diamine ;
- de 1000 à 5000 parties en poids de perborate de sodium, sous forme tétrahydratée ;
- de 300 à 3000 parties en poids d'acide citrique.
   Ou notamment encore, dans le cas où le persel est le percarbonate de sodium :
- de 250 à 3000 parties en poids de tétraacétyléthylène-diamine ;
- de 500 à 3000 parties en poids de percarbonate de sodium ;
- de 300 à 3000 parties en poids d'acide citrique.

Bien que la réalité soit sans doute plus complexe, les résultats obtenus pourraient s'analyser comme résultant du cumul de plusieurs actions :
- permanence (ou rémanence) de la production d'acide peracétique libérée dans la solution sous l'effet de son réglage par la teneur en acide citrique de celle-ci ;
- maintien par voie de conséquence des quantités d'acide acétique libérées dans le milieu à de faible taux, donc appauvrissement du milieu en un principe nutritif (précisément constitué par cet acide acétique) susceptible au contraire de stimuler la prolifération de bactéries initialement introduites dans la solution et qui auraient alors résisté à la première oxydation ;
d'où la possibilité de parachever au degré voulu la destruction oxydante à terme de bactéries -ou de spores bactériennes- ayant survécu aux premières opérations de désinfections, par exemple, en cas d'utilisation de la solution pour des désinfections répétées ou successives d'instruments de chirurgie.

En effet, faute d'être suffisamment nourries par les teneurs corrélativement plus faibles du milieu en acide acétique nutritif, les bactéries initialement survivantes ne peuvent plus résister à l'action oxydante des ions peracétiques libérés en permanence dans le milieu.

L'invention concerne encore plus particulièrement les compositions solides destinées à la production des milieux précédents, ceux-ci étant caractérisés par des proportions relatives telles, qu'elles permettent la constitution des milieux susdéfinis.

Certes, les stabilisants répertoriés dans la bibliographie (ex. : dérivés phosphoniques, amino-carboxyliques, phosphoriques, polymères acryliques, gluconate ou glucoheptonate de sodium ou potassium...) peuvent également être ajoutés en petites quantités. Les poudres peuvent en outre être colorées, par exemple à l'aide des colorants connus dans le commerce sous les désignations suivantes (étant naturellement entendu que d'autres colorants peuvent également convenir :
- des colorants de type monoazo, c'est à dire des composés comportant une fonction azo
   -N = N- ; à titre d'exemple les produits commercialisés par la société WACKHERR sous les désignations ROUGE VIF W 3002 et ORANGE SOLEIL W 2002 ;

Des caractéristiques supplémentaires de l'invention apparaîtront encore au cours de la description des conditions dans lesquelles les milieux conformes à l'invention peuvent être constitués. Il va de soi que ces indications n'ont que valeur d'exemples et ne sauraient donc en aucune façon être considérées comme présentant un caractère limitatif. Il va sans dire que d'autres conditions peuvent être élaborées aux mêmes fins.

On produit une génération in situ de peracétate de sodium par perhydrolyse de la tétraacétylène-diamine (TAED) par du perborate de sodium tétrahydraté (ci-après désigné par l'abréviation (PBS4). A cette fin, le mélange contenant le persel, le TAED, l'acide citrique et, le cas échéant, le stabilisant utilisé sont introduits dans un réacteur maintenu à 20°C. 400 ml d'eau sont ajoutés sous agitation, à raison de 500trs/min.

Toutes les trente minutes, des échantillons ont été prélevés et leurs teneurs en peracétate de sodium (APA) analysées par potentiométrie après acidification.

Les courbes contenues dans les dessins et auxquels il est plus particulièrement fait référence ci-après mettent toutes en évidence l'influence de l'addition d'acide citrique au milieu. Il permet une meilleure solubilisation du TAED, induit une variation du pH des solutions, réduisant ainsi l'effet tampon des borates.

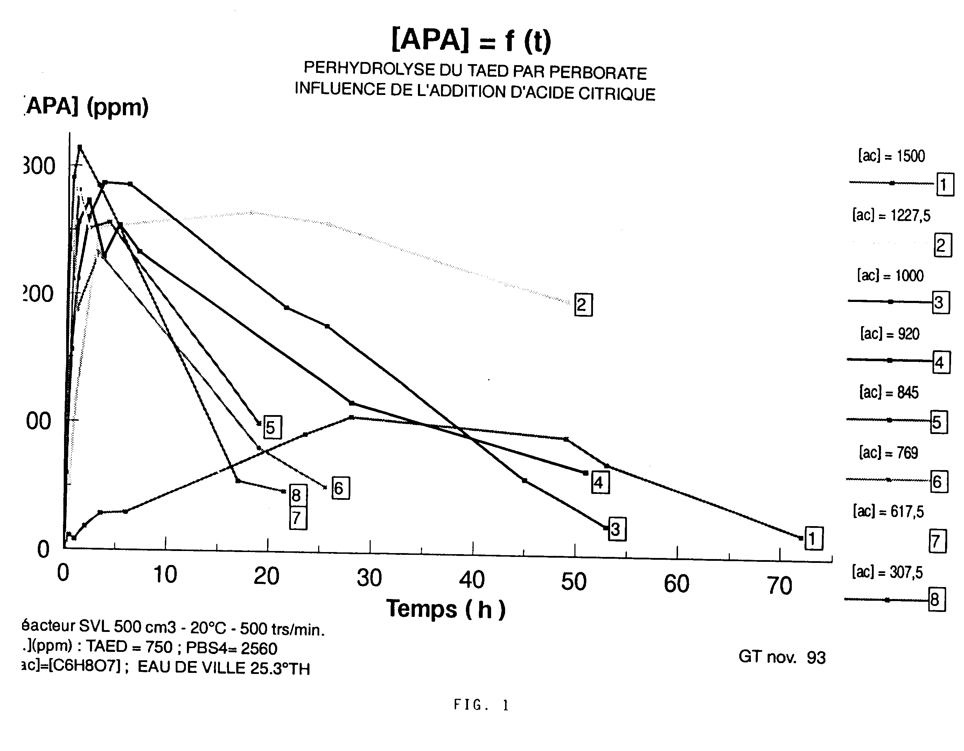

- La **figure 1** comporte des courbes respectivement représentatives des variations de la concentration d'une solution aqueuse en acide peracétique (APA(ppm) sur l'axe des ordonnées) en fonction du temps, en heures, ces courbes résultant d'essais effectués dans des conditions par ailleurs identiques, si ce n'est que les concentrations en acide citrique ont chaque fois été différentes ;

Dans cet exemple, les proportions initiales de TAED et de PBS4 tétrahydraté ajoutées au milieu ont permis des concentrations initiales du milieu en ses constituants de 750 ppm de TAED et de 2 560 ppm de PBS4. Les proportions en acide citrique (ac) étaient respectivement choisies dans un intervalle de 307,5 à 1 500 ppm.

Comme ces courbes le montrent, des proportions importantes d'acide citrique permettent le freinage de la libération des ions peracétiques lors de la mise en réaction des constituants de la réaction et un étalement dans le temps de cette libération. Ces phénomènes sont particulièrement marqués pour les concentrations d'acide citrique de 1 500 ppm (figure 1) et de 1 227,5 ppm d'acide citrique (courbe 2). Il est d'ailleurs remarquable que les résultats les meilleurs sont obtenus avec la concentration en acide citrique de 1 227,5 ppm.

Le rapport massique optimum TAED/PBS4/acide citrique est de 1/3,4/1,6. Dans ces conditions, la concentration en acide peracétique dans le milieu est encore de 200 ppm après 50 heures de réaction.

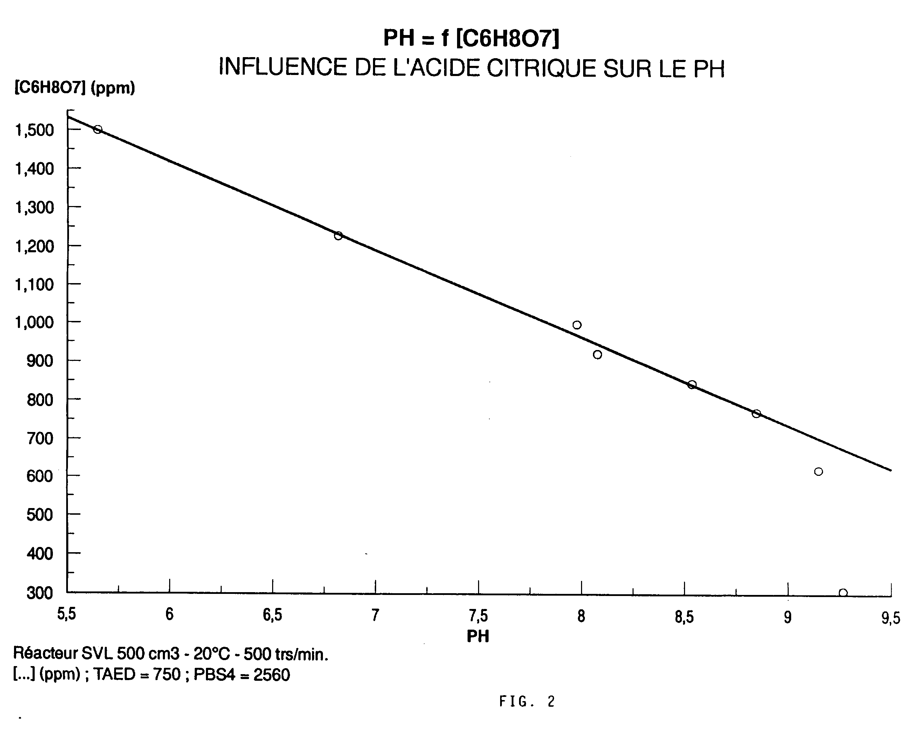

- La **figure 2** comporte une courbe représentative de l'influence de l'acide citrique C₆H₈O₇ (en ppm sur l'axe des ordonnées) sur le pH d'un milieu dont la composition est indiquée plus loin.

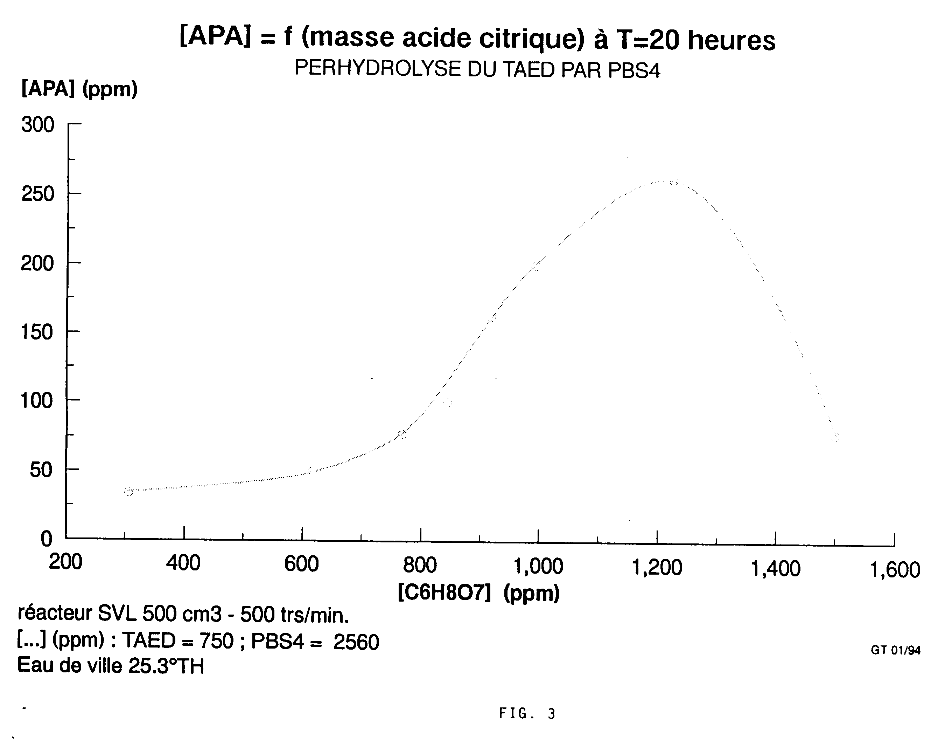

- La **figure 3** est représentative de l'influence de la teneur en acide citrique (en ppm sur l'axe des abscisses) sur la teneur d'un milieu tel que ci-dessus défini en acide peracétique (en ppm d'APA) sur l'axe des ordonnées) tel que produit par perhydrolyse par de TAED par du perborate de sodium tétrahydraté dans les conditions qui sont précisées dans la description qui suit.

Il va de soi que l'homme du métier saura dans chaque cas et, notamment dans des conditions semblables, déterminer les proportions otimales de l'acide citrique (ou d'un autre acide organique exerçant des fonctions semblables) à mettre en oeuvre, eu égard aux concentrations relatives préalablement choisies des constituants du système générateur d'ions peracetiques, qu'il s'agisse des mêmes ou de constituants différents.

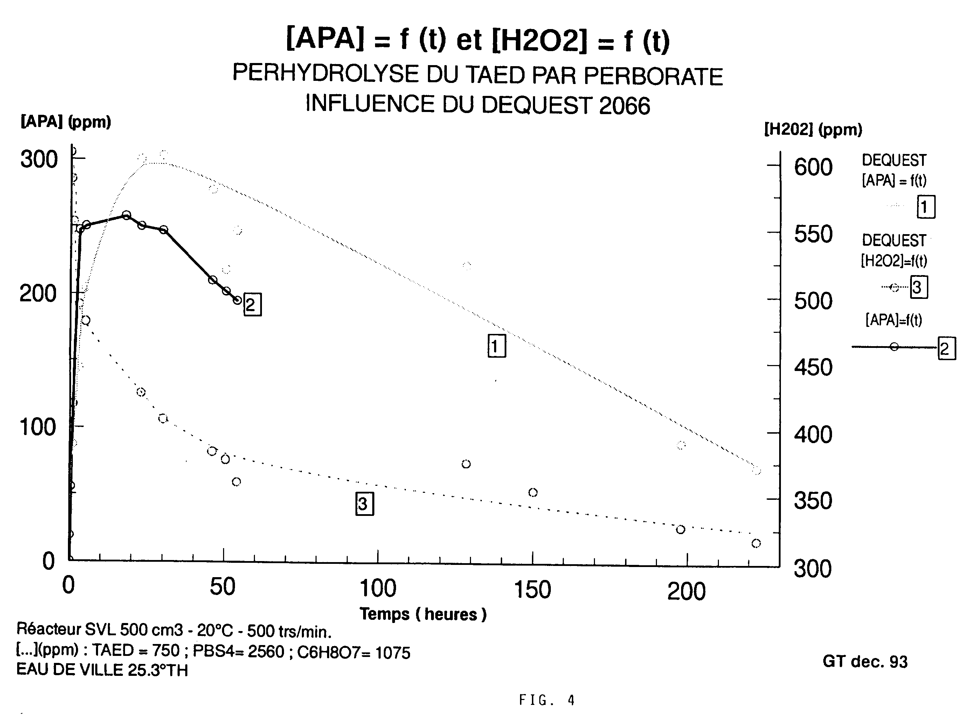

- La **figure 4** illustre la variation de la teneur du milieu en APA mesurée au bout de 20 h, après la mise en contact du TAED et du PBS4 en fonction de la masse d'acide citrique utilisé. On constate le caractère favorisant de concentrations en acide citrique, notamment comprises entre 800 et 1400 ppm sur la production d'APA, lors de la perhydrolyse du TAED par PBS4, dans les conditions indiquées.

En présence d'un stabilisant, notamment d'un dérivé phosphonique du type sel heptasodique de l'acide diéthylène triamine penta(méthylphosphonique) on peut encore accroître davantage la production de l'APA et le maintien de sa teneur en permanence en APA à des valeurs supérieures à 100 ppm (entre 100 et 300 ppm d'APA), pendant une durée dépassant 200 heures (courbe 1 de la **figure 4**).

Il est à remarquer que la teneur en APA était encore supérieure à 200 après 100 heures de réaction en l'absence du stabilisant (courbe 2). Ces résultats sont à comparer à ceux illustrés par la courbe 3 obtenus en l'absence d'acide citrique. Dans les conditions de l'expérience, la teneur en APA a chuté au-dessous de 100 ppm autour de la trentième heure.

Dans cet essai, les concentrations relatives en TAED et en PBS4 étaient respectivement de 750 et 2 560 ppm, tandis que la teneur en acide citrique initiale était de 1 065 ppm.

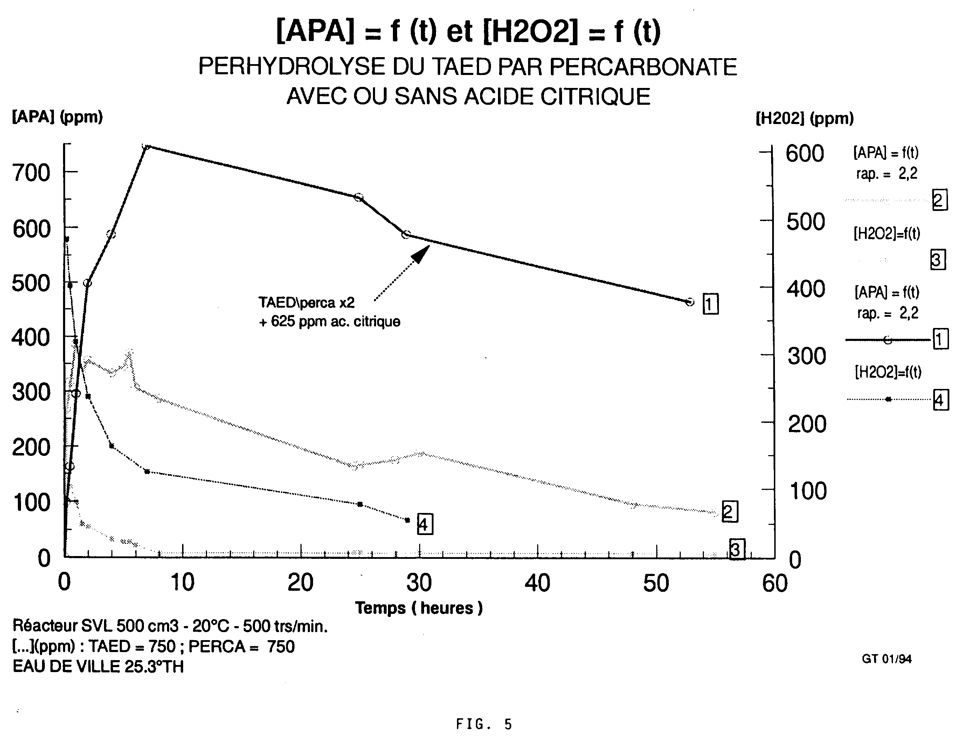

La **figure 5** témoigne de résultats semblables dans des essais dans lesquels le persel consistait en percabonate de sodium en lieu et place du PBS4. Les résultats illustrés par les courbes ont été obtenus en mettant en oeuvre le TAED, le percabonate (PERCA) et l'acide citrique dans des proportions correspondant respectivement à 750, 750 et 625 ppm.

Le rapport massique persel/TAED/acide organique était de 1/1/0,83. Il a été constaté que la concentration en APA était 5 fois plus élevée, lorsque la quantité des matières premières était doublée.

Comme dans les cas précédents, l'acide citrique a exercé un effet de freinage sur la libération de l'acide peracétique. En présence d'acide citrique le maximum est atteint en 7 heures (courbe 1) alors qu'il l'était au bout de 1,30 heures en présence d'acide citrique (courbe 2). On remarque également l'effet favorisant global qu'exerce l'acide citrique sur la production d'acide peracétique par le système générateur mis en oeuvre.

Si l'acide citrique constitue à ce jour l'acide organique stabilisateur préféré, il n'est pas le seul. C'est ce que montre la **figure 6**, qui fait apparaître que dans des conditions identiques, d'autres acides peuvent jouer le même rôle. Tel est le cas de l'acide succinique. Pour être moins efficace que l'acide citrique, il est également apte à autoriser le réglage dans le temps, de la libération des ions peracétiques dans un milieu pendant des durées qui peuvent être suffisantes. Comme le montre la courbe relative à l'acide succinique, celui-ci peut induire un effet de stabilisation suffisant dans des situations où l'on peut se satisfaire de concentrations plus faibles en ions peracétiques libérés en permanence dans le milieu, par exemple pour des applications, qui ne requèreraient qu'une décontamination. En effet, dans les conditions expérimentales qui apparaissent également dans la figure 6, on constate que l'acide succinique permet de maintenir une libération permanente d'acide succinique pendant des durées qui dépassent 20 heures, la concentration en APA étant en permanence maintenue à des valeurs supérieures à plusieurs dizaines de ppm. Il est à remarquer que l'homme du métier serait naturellement à même de modifier les paramètres relatifs aux conditions d'utilisation optimales de l'acide succiniques, qui pourraient citrique ne pas coïncider avec les conditions d'utilisation optimale de l'acide citrique.

L'acide tartrique en revanche, ne présente guère d'activité stabilisante, du moins dans les conditions indiquées. Il pourrait ne pas en être de même dans des conditions optimisées. Il est clair enfin que l'homme du métier peut, ne serait-ce que par la mise en oeuvre d'un test tel que celui auquel la figure 6 fait référence, identifier d'autres acides organiques qui permettraient, comme l'acide citrique et l'acide succinique, de régler et stabiliser la libération d'ions peracétiques dans le milieu.

### Tests d'efficacité microbiologique

Des tests d'efficacité bactéricide (Tableau 1), fongicide (Tableau 2), sporicide (Tableau 3), ont été réalisés selon les protocoles respectivement des normes AFNOR 72-150, 72-200 et 72-230, sur différents mélanges mettant en oeuvre un persel (perborate de sodium tétrahydraté ou percarbonate de sodium), du TAED et de l'acide citrique.

Les différentes formulations utilisées apparaissent dans les partie supérieures gauche des tableaux et les résultats observés dans les parties droites. Les conditions dans lesquelles les essais ont été réalisés (temps de contact, températures, substances interférantes, élimination de la composition biocide) apparaissent dans les parties inférieures de gauche. Y figurent aussi, du moins dans certains de ces tableaux, des résultats à titre comparatif obtenus avec le produit commercialisé sous la marque BACTIPAL.

Enfin dans les parties droites des tableaux, les réductions exprimées en logarithmes en fonction du temps en heures (h) de maturation des mélanges et des concentrations en matières actives (ppm) vis à vis des microorganismes également identifiés dans les parties supérieures des tableaux en cause.

Les temps qui également figurent dans les parties supérieures des parties droites des tableaux, correspondent aux intervalles de temps ayant séparé la production des solutions biocides elles-mêmes, par mise en contact des constituants appropriés, et les moments où les cultures microbiennes testées ont été mises en contact avec les solutions biocides obtenues.

Le tableau 1 fait apparaître des activités bactéricides remarquables des compositions testées. Elle présente un caractère désinfectant certain dans tous les cas de figures, voire même stérilisant, par exemple à l'égard de Staphylococcus aureus, 24 heures après la formation des bains.

Des observations quasiment semblables peuvent être faites à l'égard de l'activité fongicide des solutions testées, notamment à l'égard de Candida Albicans. On observe une action décontaminante certaine, confinant à une activité anti-infectieuse. Il va s'en dire que celle-ci pourra être obtenue également de façon certaine, par simple optimisation des proportions des constituants initiaux devant entrer dans la solution biocide.

Les premières observations faites quant à l'activité biocide des solutions testées à l'égard de spores bactériennes conduisent à des observations de même nature.

Les compositions selon l'invention, plus particulièrement à l'état sec, peuvent être conservées durablement. Elles peuvent se présenter sous les différentes formes classiques de présentation des formulations (poudres, tablettes, uni-doses, etc.). Ces formulations peuvent ensuite être utilisées très facilement, par exemple dans le cas de liquide de trempage d'instruments thermo-sensibles (par exemple instrument chirurgicaux, endoscopes...).

On procède alors par exemple comme suit. Les poudres tablettes ou granulés sont dissous dans une solution acqueuse stérile. L'APA est alors généré in situ et les différents matériels sont immergés dans le milieu, pendant la durée nécessaire, par exemple 30 minutes. Il sont ensuite retirés, rincés et, le cas échéant, étuvés. La même solution est alors à nouveau disponible pour d'autres désinfections du même type, compte tenu de la durée d'action des solutions désinfectantes.

Pareillement, des solutions préalablement formées du même type, pourront être utilisées pour décontaminer ou désinfecter des canalisations destinées à la distribution de l'eau potable, le débit de circulation dans les canalisations étant réglé en fonction du temps de contact désiré. Ces canalisations peuvent alors ensuite être rincées à l'eau potable jusqu'à élimination complète des dernières traces des solutions biocides qu'elles pouvaient encore contenir.

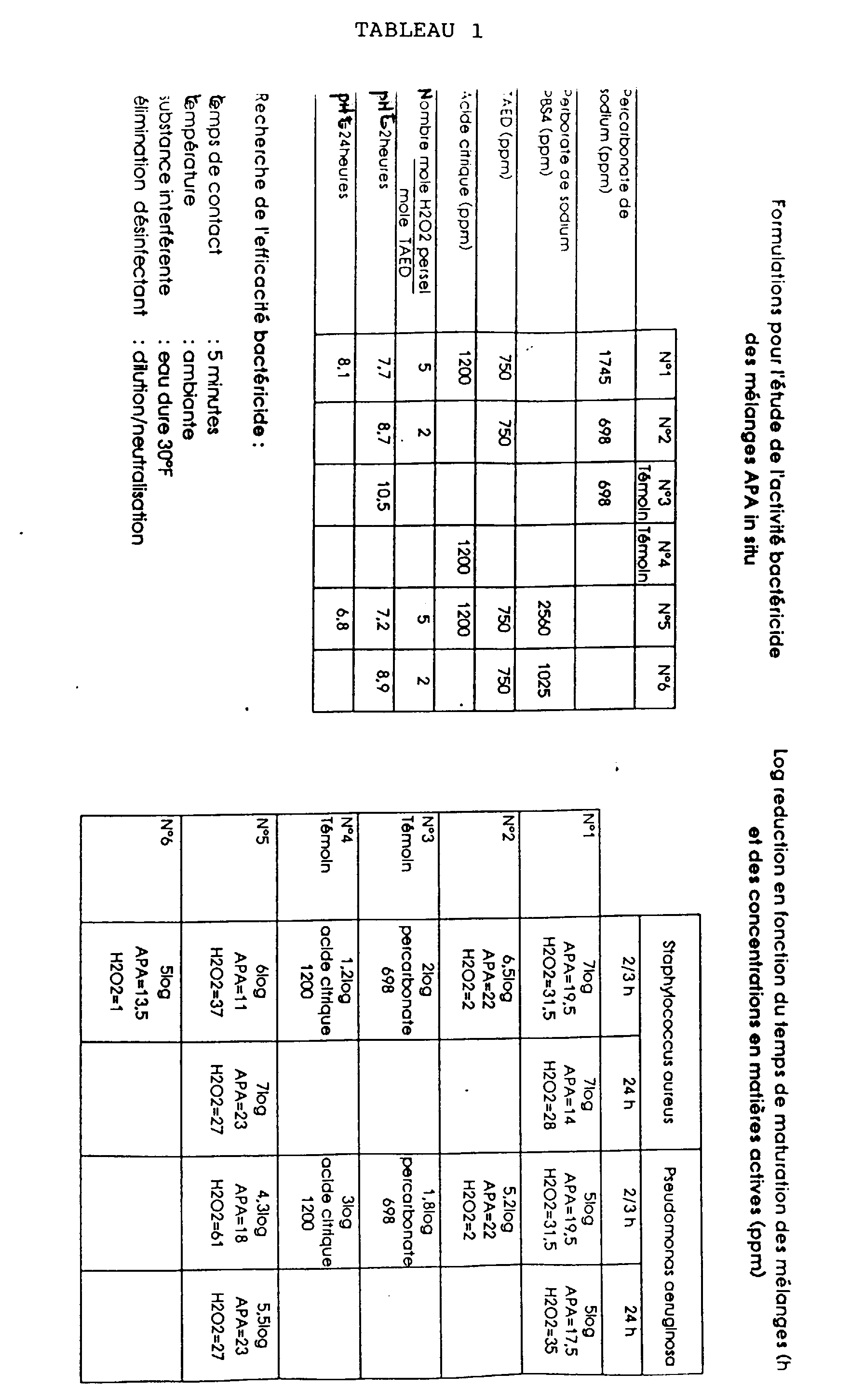

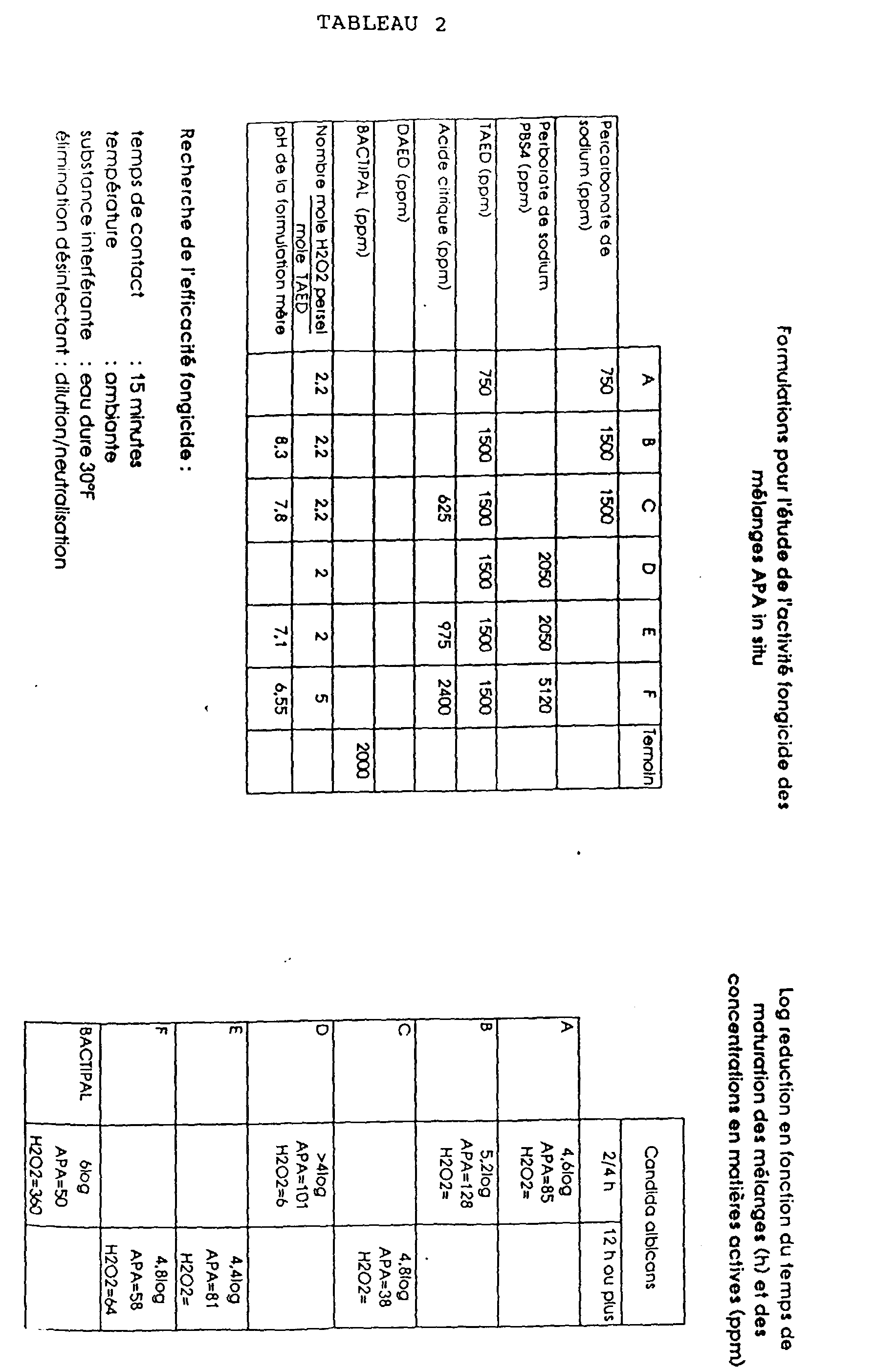

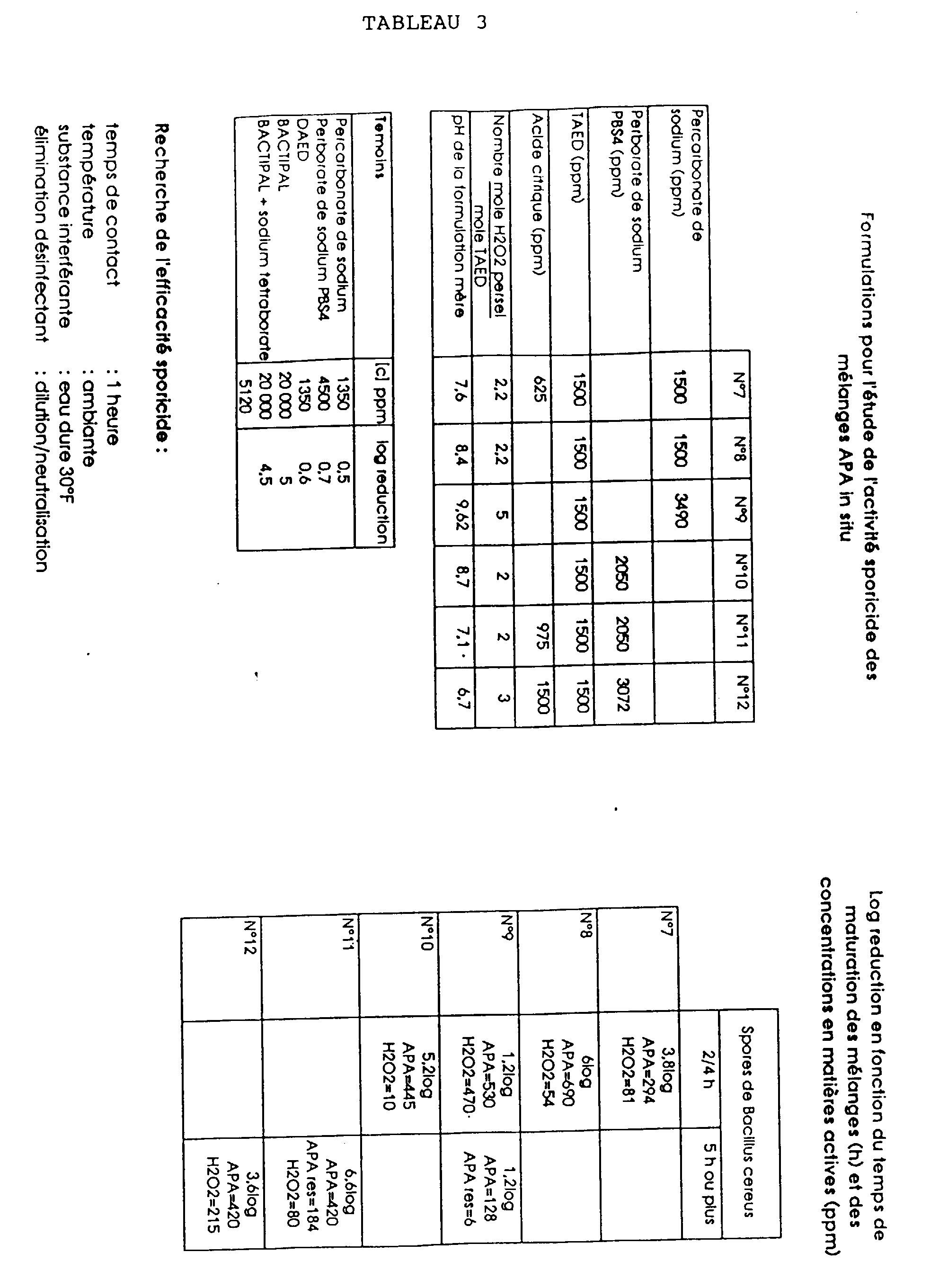

## Revendications

1. Procédé de production d'une solution aqueuse biocide à longue durée d'action dont le principe biocide essentiel consiste en des ions peracétiques, ce procédé comportant l'introduction dans la solution d'un système générateur d'ions peracétiques, dès l'origine au contact d'un acide organique stabilisateur choisi pour sa capacité, lorsqu'il est pris en des proportions choisies par rapport à celles des constituants du système générateur d'ions peracétiques, a autoriser le réglage dans le temps de la libération d'ions peracétiques dans le milieu, les concentrations relatives des constituants du système générateur, d'une part, et de l'acide organique stabilisateur, d'autre part, étant respectivement réglées de façon à ce que les concentrations des ions peracétiques libérés dans le milieu dépassent un seuil de concentration autorisant, pendant la durée d'action préalablement choisie, l'induction de l'effet biocide requis à l'égard des micro-organismes, notamment contaminants bactériens et virus portés par des pièces ou surfaces introduites dans la solution.

2. Procédé selon la revendication 1, caractérisé en ce que l'effet biocide requis est un effet anti-infectieux.

3. Procédé selon la revendication 1 ou la revendication 2, caractérisé en ce que l'acide organique stabilisateur est de l'acide citrique.

4. Procédé selon l'une quelconque des revendications 1 à 3, caractérisé en ce que le système générateur d'acide peracétique est constitué par un système réactionnel mettant en oeuvre de l'acide acétique et de l'eau oxygénée.

5. Procédé selon la revendication 1 ou la revendication 2, caractérisé en ce que le système générateur d'acide peracétique consiste en un mélange d'un précurseur d'acide peracétique et d'un constituant distinct, notamment d'une persel, autorisant la perhydrolyse de ce précurseur au sein de la solution.

6. Procédé selon l'une quelconque des revendications 1 à 5, caractérisé en ce que les concentrations relatives des constituants du système générateur, d'une part, et de l'acide organique stabilisateur, d'autre part, sont réglées de façon à permettre la génération au sein du volume de la solution aqueuse, d'une concentration d'acide peracétique supérieure à un seuil de 10 ppm, de préférence de 40 ppm, et la stabilisation de cette concentration à des valeurs supérieures à ce seuil pendant une durée d'au moins 24 heures.

7. Procédé selon la revendication 5 ou 6, caractérisé en ce que le précurseur d'acide peracétique est la tétracétyléthylène-diamine et le persel un perborate de sodium, de préférence sous forme tétrahydratée.

8. Procédé selon la revendication 7, caractérisé par des proportions relatives :
- de 250 à 3000 parties en poids de tétraacétyléthylène-diamine ;
- de 1000 à 5000 parties en poids de perborate de sodium, sous forme tétrahydratée ;
- de 300 à 3000 parties en poids d'acide citrique.

9. Procédé selon la revendication 5 ou 6, caractérisé en ce que le précurseur d'acide acétique est la tétraacétyléthylène-diamine et le persel un percarbonate de sodium.

10. Procédé selon la revendication 9, caractérisé par des proportions relatives :
- de 250 à 3000 parties en poids de tétraacétyléthylène-diamine ;
- de 500 à 3000 parties en poids de percarbonate de sodium ;
- de 300 à 3000 parties en poids d'acide citrique.

11. Procédé selon l'une quelconque des revendications 1 à 9, caractérisé en ce que la teneur en acide organique stabilisateur de la solution est ajustée pour obtenir un pH compris entre 4 et 13, notamment de l'ordre de 6 à 10,5.

12. Milieu aqueux contenant un système générateur d'acide peracétique générant des ions peracétiques, caractérisé par la présence dans ce milieu d'une concentration d'un acide organique, tel que l'acide citrique, choisi pour sa capacité, lorsqu'il est pris en des proportions choisies à l'origine par rapport à celles des constituants du système générateur, à autoriser le réglage de la libération dans le milieu et dans le temps.

13. Milieu selon la revendication 11, caractérisé en ce que le système générateur d'acide peracétique est constitué par un système réactionnel mettant en oeuvre de l'acide acétique et de l'eau oxygénée.

14. Milieu selon la revendication 11, caractérisé en ce que le système générateur d'acide peracétique consiste en un mélange d'un précurseur d'acide peracétique et d'un constituant distinct, notamment d'une persel, autorisant la perhydrolyse de ce précurseur au sein de la solution.

15. Milieu selon l'une quelconque des revendications 10 à 13, caractérisé en ce que les concentrations relatives des constituants du système générateur d'une part, et de l'acide organique stabilisateur, d'autre part, sont réglées de façon à permettre la génération au sein de ce milieu, d'une concentration d'acide peracétique restant en permanence supérieure à un seuil de 10 ppm, de préférence 40 ppm, pendant une durée d'au moins 24 heures.

16. Milieu selon la revendication 12, caractérisé en ce que le précurseur d'acide peracétique est la tétracétyléthylène-diamine et le persel un perborate de sodium, de préférence sous forme tétrahydratée.

17. Milieu selon la revendication 15 ou 16, caractérisé par des concentrations relatives :
- de 250 à 3000 de tétraacétyléthylène-diamine ;
- de 1000 à 5000 de perborate de sodium, sous forme tétrahydratée ;
- de 300 à 3000 d'acide citrique.

18. Milieu selon la revendication 12, caractérisé en ce que le précurseur d'acide peracétique est la tétracétyléthylène-diamine et le persel un percarbonate de sodium.

19. Milieu selon la revendication 15 ou 16, caractérisé par des concentrations relatives :
- de 250 à 3000 parties en poids de tétraacétyléthylène-diamine ;
- de 500 à 3000 parties en poids de percarbonate de sodium ;
- de 300 à 3000 parties en poids d'acide citrique.

20. Milieu selon l'une quelconque des revendications 13 à 19, caractérisé en ce que la teneur en acide organique stabilisateur de la solution est ajustée pour obtenir un pH compris entre 4 et 13, notamment entre 6 et 10,5.

21. Application à la désinfection complète de pièces ou surfaces plongées dans le milieu selon l'une quelconque des revendications 12 à 20 à la destruction ou l'inactivation des contaminants bactériens dont elles pouvaient auparavant être porteuses.

22. Application selon la revendication 21 à la désinfection d'instruments, outils ou ou ustensiles utilisés dans les professions de la santé (par exemple instruments chirurgicaux, endoscopes, etc.) ou en matière d'hygiène (lentilles de contact, prothèses dentaires..

23. Application selon la revendication 21 à la désinfection des parois de canalisations, notamment celles destinées à la distribution d'eau potable.

24. Composition solide contenant un système générateur d'ions peracétiques, mélangé à un acide organique stabilisateur choisi pour sa capacité, lorsque cette composition est introduite dans une solution aqueuse en des concentrations appropriées, à autoriser le réglage dans le temps de la libération des ions peracétiques dans cette solution aqueuse, les proportions relatives des constituants du système générateur, d'une part, et de l'acide organique stabilisateur, d'autre part, étant respectivement réglées de façon à ce que la concentration d'acide peracétique alors générée soit supérieure à un seuil de concentration capable d'induire un effet biocide pendant une durée d'action préalablement choisie.

25. Composition selon la revendication 24, caractérisée par un contact intime entre les constituants du système générateur d'ions peracétiques et de l'acide organique stabilisateur de façon à promouvoir la simultanéité de leurs introductions respectives dans la solution aqueuse.

26. Composition selon la revendication 23 ou la revendication 25, caractérisée en ce que l'acide organique est de l'acide citrique.

27. Composition selon l'une quelconque des revendications 23 à 26, caractérisée en ce que le système générateur d'acide peracétique est constitué par un système réactionnel mettant en oeuvre de l'acide acétique et de l'eau oxygénée.

28. Composition selon l'une quelconque des revendications 23 à 26, caractérisée en ce que le système générateur d'acide peracétique consiste en un mélange d'un précurseur d'acide peracétique et d'un constituant distinct, notamment d'une persel, autorisant la perhydrolyse de ce précurseur au sein de la solution.

29. Composition selon l'une quelconque des revendications 22 à 28, caractérisée en ce que les concentrations relatives des constituants du système générateur, d'une part, et de l'acide citrique, d'autre part, sont réglées de façon à permettre la génération dans le susdit volume de solution aqueuse, l'établissement d'une concentration d'acide peracétique supérieure à un seuil de 10 ppm, de préférence 40 ppm, et le maintien, en permanence, de cette concentration pendant une durée d'au moins 24 heures.

30. Composition selon la revendication 29, caractérisée en ce que le précurseur d'acide peracétique est la tétracétyléthylène-diamine et le persel un perborate, sous forme tétrahydratée ou un percarbonate.

31. Composition selon la revendications 30 ou 29, caractérisée par des proportions pondérales relatives :
- de 250 à 3000 parties en poids de tétraacétyléthylène-diamine ;
- de 1000 à 5000 parties en poids de perborate de sodium, sous forme tétrahydratée ;
- de 300 à 3000 parties en poids d'acide citrique.

32. Composition selon la revendication 29, caractérisée en ce que le précurseur d'acide peracétique est la tétracétyléthylène-diamine et le persel un percarbonate de sodium.

33. Composition selon la revendications 30 ou 29, caractérisée par des proportions pondérales relatives :
- de 250 à 3000 parties en poids de tétraacétyléthylène-diamine ;
- de 1000 à 5000 parties en poids de percarbonate de sodium ;
- de 300 à 3000 parties en poids d'acide citrique.

34. Composition selon l'une quelconque des revendications 24 à 33, caractérisée par une proportion en acide citrique permettant, lorsqu'elle est introduite dans le volume approprié de solution aqueuse, l'établissement dans cette solution d'un pH compris entre 4 et 13, notamment de l'ordre de 6 à 10,5.

35. Application de la composition selon l'une quelconque des revendications 24 à 34 à la production de solutions biocides, notamment à des fins hygiéniques ou désinfectantes.
